# EUROPEAN PATENT SPECIFICATION

(11) **EP 1 499 179 B1**
(45) Date of publication and mention of the grant of the patent: **19.12.2007**
(21) Application number: 03725895.1
(22) Date of filing: 30.04.2003
(51) Int. Cl.: A01K 63/02, B63B 35/26

(54) **SLIDING BULKHEAD FOR SORTING OF LIVE FISH**
SCHIEBETRENNWAND ZUM SORTIEREN VON LEBENDEN FISCHEN
CLOISON COULISSANTE PERMETTANT DE TRIER DES POISSONS VIVANTS

(30) Priority: 02.05.2002 NO 20022116
(43) Date of publication of application: 26.01.2005
(73) Proprietor: Sintef Fiskeri Og Havbruk AS, 7465 Trondheim (NO)
(72) Inventor: BJORSHOL, Nils, H., N-7465 Trondheim (NO)
(74) Representative: Haley, Stephen
(86) International application number: PCT/NO2003/000140
(87) International publication number: WO 2003/092369

(56) References cited:
- WO-A1-86/05946
- WO-A1-02/100713
- GB-A- 1 297 611
- GB-A- 2 361 400
- DATABASE WPI Week 199119, Derwent Publications Ltd., London, GB; Class D12, AN 1991-136275, XP002903098 & JP 3 072 828 A (HITACHI ZOSEN CORP) 28 March 1991

## Description

### Introduction

This invention relates to an apparatus and method for transport and unloading of several populations of size classes of live fish in a fish carrier. The invention also relates to sorting of live fish in a gentle manner.

### Problem and prior art

Displacing live fish in a tank by means of a sliding bulkhead is known, among other things shown in a folder concerning unidirectional flow girder from Skretting. The fish is displaced towards one end of a rectangular tank by means of a sliding bulkhead. The fish arrives at the desired end and is removed from the tank in a crate or a grab, both lifted by means of a crane. An alternative in a fish carrier is to lower the water level and then pump out the fish by means of a vacuum pump. In the last described method the fish is stressed when the water level is lowered, and it also becomes stressed by being vacuum pumped, and this should be undesirable due to animal care and fish quality considerations. Stiffness of death in the fish is caused more quickly when it has been stressed immediately before the slaughter. Salmon badly endures vacuum pumping and easily receives internal bleedings when the pressure abruptly decreases below a pressure of one atmosphere during pumping. Moreover, lowering the water level within the vessel involves a negative influence on the stability of the vessel.

Further it is considered a problem that if the fish comprises two or more populations of size classes of increasing size p1, p2, ... , pn, the smaller population p1 would not win the fight for the supplied food. For this reason, an object of the invention with the present invention is to sort the populations in fish carrier with a sliding bulkhead, in a gentle manner.

Another problem is receiving, transporting and unloading several populations p1, p2 of fish, e.g. received from two different suppliers and owned by two different recipients. A further object of the present invention is to keep these populations separated during transport in one and the same tank, and unloading them separately in a gentle manner.

Norwegian patent application NO 2001.2898 belonging to Sintef Fiskeri og havbruk AS, describes a fish carrier having a transport tank in a doubly curved hull, wherein a sliding bulkhead follows the doubly curved profile of the hull during movement of the sliding bulkhead forwards and backwards along the tank, so that the fish is forced out of the hull in the desired direction without stressing the fish in any degree worth mentioning. However, NO 2001.2898 does not suggest any manner of transporting or sorting several populations p1, p2 of different size classes of fish or fish to be kept separately for other reasons, e. g. due to different species or different ownership.

### Short summary of the invention

This invention represents a solution to several of the problems mentioned above, and in a first aspect consists in a method for sorting of mixed populations of fish into two different size classes, called a population of smaller-size fish and a population of larger-size fish, in a fish carrier having a sliding bulkhead with a separation grating in a transport tank, said transport tank having at least one fore inlet for fresh oxygen rich seawater taken from the sea, or oxygenated recycled water, and at least one aft outlet for water and fish, characterized in that it comprises the following steps:
i) opening said separation grating and running said sliding bulk-head towards the inlet to a position closer to the inlet than a desired part, preferably all, of the populations;
ii) restricting said separation grating to a grating aperture smaller than the size of the individuals in said population and larger than the size of the individuals of said smaller-size population and running said sliding bulkhead astern, so that said sliding bulkhead with the separation grating displaces said larger-size population towards the outlet so that said population is forced out through outlet, thus allowing said smaller-size population to escape ahead through said separation grating;
iii) opening said separation grating, and running said sliding bulkhead towards said inlet to a position closer to said inlet than a desired part, preferably all, of the population of smaller individuals; and
iv) restricting said grating apertures in said separation grating, and running said sliding bulkhead with said separation grating astern, so that said population of smaller-size individuals is displaced towards said outlet and is forced out through said outlet.

In a second aspect, the invention consists in a fish carrier for sorting of mixed populations of fish into two different size classes, called a population of smaller-size fish and a population of larger-size fish, having a sliding bulkhead with a separation grating in a transport tank, the transport tank having at least one fore inlet for fresh oxygen rich seawater taken from the sea, or oxygenated recycled water, and at least one aft outlet for water and fish, characterized by:
an adjustable separation grating for running said sliding bulkhead towards said inlet to a position closer to said inlet than a desired part, preferably all, of said populations;
wherein the separation grating is arranged for being restrictable to a grating aperture which is smaller than the size of the individuals in said population for running said sliding bulkhead astern, so that said sliding bulkhead with separation grating can displace said larger-size population towards said outlet so that said population is forced through said outlet;
wherein the separation grating is arranged to be opened and said sliding bulkhead is arranged to be run towards said inlet to a position closer to said inlet than said population of smaller-size individuals; and
wherein the grating apertures in said separation grating are restrictable and that said sliding bulkhead with said separation grating is arranged to be run astern, so that said population of smaller-size individuals is forced towards said outlet and forced out through outlet.

### Brief description of the drawings

The invention is illustrated in the accompanying drawings which are included to illuminate the invention. The drawings should not be interpreted as limiting for the invention, the scope of which should be limited only by the accompanying claims.

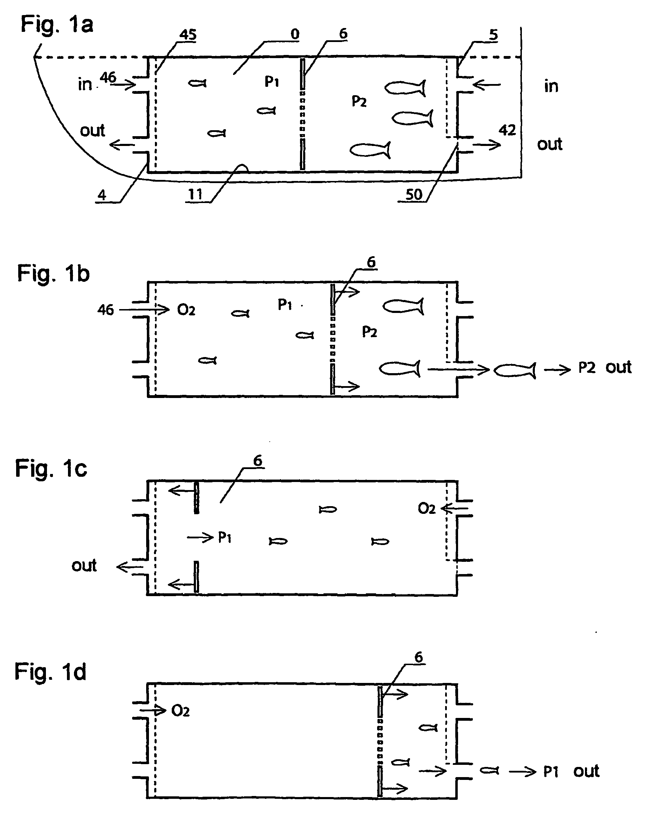

- Figure 1a: is a rather simplified schematic top view of a transport tank at the starboard side of a centre bulkhead in a fish carrier. A sliding bulkhead runs in the longitudinal direction of the tank and the vessel. The transport tank contains two separate populations p1 and p2 to be unloaded separately.
- Figure 1b: is the same schematic top view in which said sliding bulkhead is displaced astern and forces population p2 out through an outlet in the stern end of said vessel. A large amount of water is supplied from ahead, so that the fish in p2 generally will exit with its tail first and is accelerated out through said outlet when arriving at this, and be pumped to a desired location for intermediate storage, further growth or slaughtering.
- Figure 1c: shows the same schematic top view of said tank in which said sliding bulkhead now is displaced ahead towards the bow, and in which a separation grating or a hatch is completely open so as to have the fish running through to the larger tank volume astern of said sliding bulkhead without obstruction.
- Figure 1d: illustrates that said sliding bulkhead is again moved astern with said separation grating closed for said population p1 and displaces population p1 through said outlet for water and fish, this time to another location than for population p2.

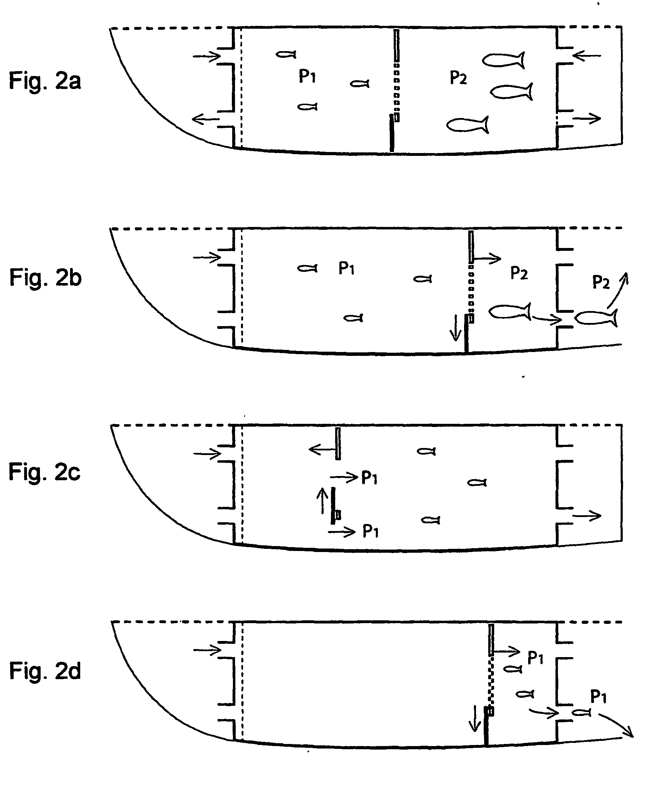

- Figure 2a: illustrates two separate populations p1 and p2 on each side of a sliding bulkhead in a fish carrier in which said tank has a wall which is constituted by a curved inner skin in said hull, and a second wall which is constituted by a centre bulkhead.
- Figure 2b: is the same schematic top view as figure 2a, in which a sliding bulk-head is displaced astern and forces population p2 through an outlet at the stern of said vessel. The figure further illustrates the same situation as in figure 1b.
- Figure 2c: shows the same schematic top view of said tank in which said sliding bulkhead now is displaced ahead towards the bow, and in which a separation grating is completely open or the transversal sliding bulk-head has been completely withdrawn along said sliding bulkhead, so as to have the fish running through to the larger tank volume astern of said sliding bulkhead without obstruction.
- Figure 2d: illustrates that said sliding bulkhead is moved astern again with said separation grating or transversal sliding bulkhead closed for population p1 and displaces population p1 through said outlet for water and fish, this time also preferably to another location than for population p2.

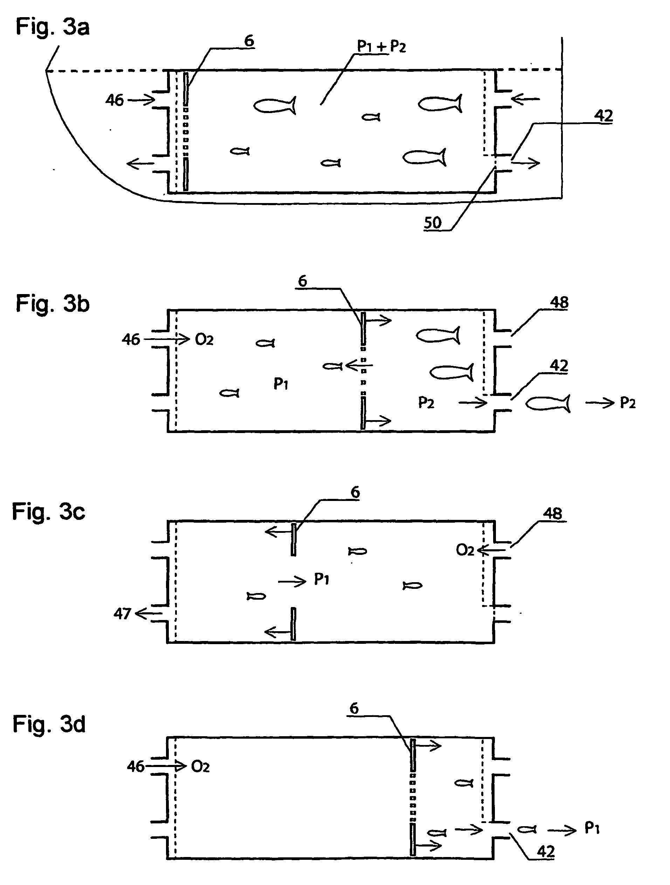

- Figure 3a: is similar to figure 1 a a rather simplified schematic view of a transport tank at the starboard side of a centre bulkhead in a fish carrier. A sliding bulk-head runs in the longitudinal direction of said tank and said vessel. The difference from figures 1 and 2 is that said transport tank includes two mixed populations p1 and p2 to be unloaded separately. Said sliding bulk-head has been run to a fore end of said tank.
- Figure 3b: illustrates that oxygen rich fresh water is supplied by pumping through an inlet 46. Said sliding bulkhead is displaced astern from the position ahead and population p1 will tend to move against the water flow through said separation grating to a more oxygen rich water in said fore part of said tank, while the more large-size population p2 will be displaced towards said outlet astern of said tank, and will exit with the tail first due to the water flow and lack of space in the displaced part of said tank. The fish is now sorted at the same time as said population p2 is removed from the tank.
- Figure 3c: illustrates a preferred mode of tempting the population p1 back to the aft part of the tank by means of turning the water flow in the tank at the same time as the sliding bulkhead is run ahead towards the bow in an open position, e.g. also with a completely open or removed separation grating.
- Figure 3d: illustrates the final part of this method according to the invention in which the population p1 is displaced astern by said sliding bulkhead with said separation grating closed for population p1, and in which population p1 is forced out through said outlet at the stern end of said tank.

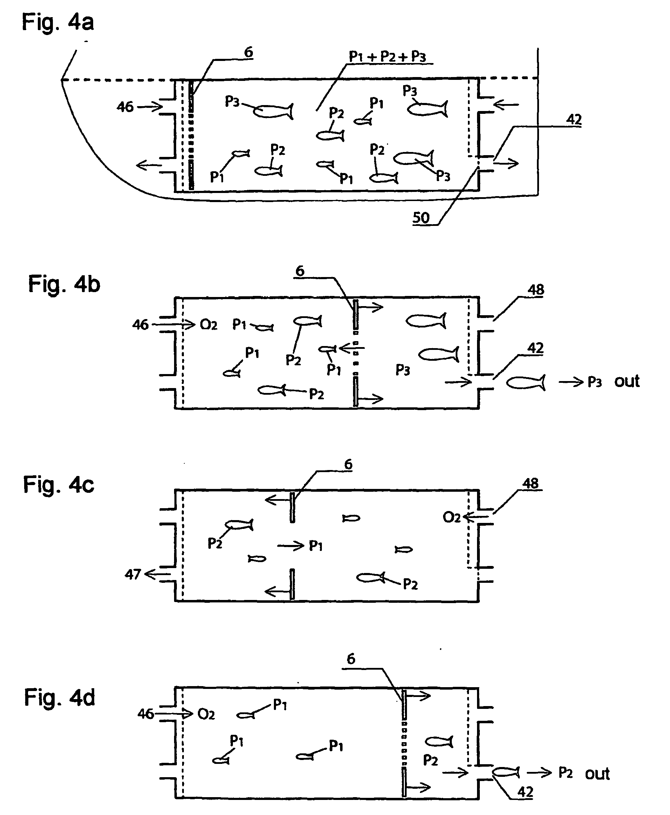

- Figure 4a: is like figure 3a a rather simplified schematic top view of a transport tank at the starboard side of a centre bulkhead in a fish carrier. As explained above, a sliding bulkhead runs in the longitudinal direction of said tank and said vessel. The difference from figure 3 is that the transport tank contains three mixed populations p1 (smallest individual size), p2 (medium size) and p3 (largest individual size) to be unloaded separately. Said sliding bulkhead is displaced to a fore end of said tank.
- Figure 4b: illustrates that oxygen rich fresh water is pumped through an inlet 46. Said sliding bulkhead is displaced astern from the fore position and the populations p1 and p2 tend to move against the water flow through said separation grating to more oxygen rich water in the fore part of said tank, while the large-size population p3 will be displaced astern towards the outlet at the aft of the tank, and will exit with the tail first due to the water flow and lack of space in the displaced part of said tank. The fish is now sorted in (p1+p2) and (p3) at the same time as the population p3 is removed from the tank.
- Figure 4c: illustrates a preferred mode of tempting populations (p1+p2) back to the aft part of the tank by means of turning the water flow in the tank at the same time as the sliding bulkhead is displaced ahead towards the bow in its open position, e.g., with a completely open or removed separation grating.
- Figure 4d: illustrates a next part of this method according to the invention in which the population p2 is displaced astern by means of the bulkhead with the separation grating open for population p1, and in which population p2 is forced out through the outlet at the stern end of said tank.

### Description of preferred embodiments of the invention: Transport and unloading of two separate populations.

Figure 1a is a rather simplified schematic top view of a transport tank 0 at the starboard side of a centre bulkhead 1 in a fish carrier. A sliding bulkhead 6 is arranged, which may run in the longitudinal direction of said tank 0 and said vessel. In a first embodiment of the invention, said transport tank contains two separate populations p1 and p2 to be unloaded separately.

According to one embodiment of the invention, it is a method for unloading two different populations p1 and p2 of fish from a fish carrier with a sliding bulkhead 6 with a separation grating 60 in a transport tank 0 with at least one fore inlet 46 for fresh water and at least one aft outlet 42 for water and fish, and in which the grating apertures in said separation grating 60 are restricted to be smaller than the individuals in both populations (p1,p2), in which the method comprises the following steps:
i) Said sliding bulkhead (6) with said separation grating (60) are displaced astern and displace one of said populations (p2) towards said outlet (42) so that said population (p2) is forced out through said outlet (42).
ii) Said separation grating (60) is opened and said sliding bulkhead (6) is displaced towards said inlet (46) to a position closer to said inlet than a desired part of population (p1). Preferably, said sliding bulkhead is displaced so as to pass the complete population (p1).
iii) Said separation grating is restricted to a grating aperture which is less than the fish size in population (p1) of smaller individuals and said sliding bulkhead is displaced astern, so that said sliding bulkhead (6) with said separation grating (60) displace said second population (p1) towards said outlet (42) so that said population (p1) is forced out through said outlet (42).

Fish in a confined space will use oxygen in the water and will as a rule swim towards more oxygen rich water which is supplied. The applicant has in experiments supplied water flow of fresh seawater in different directions through said tank under displacement of the fish, and experienced that the fish tends to swim towards the fresher water and exit backwards through said outlet (42) if fresh water in a sufficient water flow is supplied through said inlet (46). For this reason, according to a preferred embodiment of the method of the invention, it comprises pumping of fresh water through said inlet (46) so that water flows through said tank and exits through said outlet (42), at the same time as point i) in which said sliding bulkhead (6) with said separation grating (60) displace one of said populations (p2) towards said outlet (42) so that said population (p2) is forced out through said outlet (42).

According to a further preferred embodiment of the method, it further comprises pumping of fresh water in through inlet (46) so that water flows through said tank and out through outlet (42), at the same time as point (iii) above with closing of said separation grating (60) and displacement of said sliding bulkhead (6) astern. Said sliding bulkhead (6) with said separation grating (60) will then displace said second population (p1) towards said outlet (42) so that said population (p1) is forced out through said outlet (42), and said tank is at this time emptied of these two populations.

### Sorting of the fish into two populations

According to another aspect of the invention a method may be used for sorting at least two mixed populations (p1, p2) of fish into at least two different size classes called a population (p1) of smaller-size fish and a population (p2) of larger-size fish, in a fish carrier with a sliding bulkhead (6) with a separation grating (60) in a transport tank (0) with at least on fore inlet (46) for fresh water and at least one aft outlet (42) for water and fish. The method comprises the following steps:
i) Said separation grating (60) is opened and said sliding bulkhead (6) is displaced towards said inlet (46) to a position closer to said inlet (46) than a desired part of said populations (p1, p2). This can also be done before loading the fish to said vessel, so that said sliding bulk-head is ahead of the complete amount of fish in populations (p1,p2).
ii) Said separation grating (60) is restricted to a grating aperture less than the size of population (p2) and said sliding bulkhead (6) is displaced astern, so that said sliding bulkhead (6) with said separation grating (60) displaces said larger population (p2) towards said outlet (42). Population (p2) may then in the preferred embodiment be forced out through outlet (42) and be pumped to a desired intermediate storage, further growth, or slaughtering.
iii) Said separation grating (60) is opened and said sliding bulkhead (6) is displaced towards said inlet (46) to a position closer to said inlet (46) than a desired part, preferably all, of said population (p1) of smaller individuals.
iv) Said grating apertures in said separation grating (60) are restricted, and said sliding bulkhead (6) with said separation grating (60) are displaced astern so that population (p1) of smaller individuals is displaced towards said outlet (42) and may be forced out through oultlet (42).

Similarly as above, intake of fresh water through the fore inlet (46) and outlet of water through outlet 42 could be included in an advantageous preferred embodiment of the invention, simultaneously with step (ii) with restricting said separation grating (60) to grating aperture less than said populations (p2) size and displacement of said sliding bulkehead (6) astern, so that said sliding bulkhead (6) with said separation grating (60) displace said larger poulation (p2) towards said outlet (42) so that said population (p2) may be forced out through outlet (42).

According to an further preferred embodiment of the invention, the method comprises intake of fresh water through an aft inlet (48) so that the water flow in said tank flows from astern and ahead in said tank (0) with outlet of water through a fore outlet (47) during step (iii) with opening of said separation grating (60) and running of said sliding bulkhead (6) towards said inlet (46) to a position closer to said inlet (46) than the desired part, preferably all, of said population (p1) of smaller individuals.

### Possible use of transversal sliding bulkhead as separation grating

It is also possible to utilize a transversal sliding bulkhead 7 for forming a simple aperture as "separation grating" between a fore and aft part of said tank 0. Even though it could be difficult to control the exact size of said aperture which in such case is formed between said transversal sliding bulkhead 7 and said inner skin 11 of said curved side of the ship, this could function as a possible solution for unloading two separate populations (p1,p2) of fish, please see Figure 2a which illustrates two separate populations (p1 and p2) being on either side of a sliding bulkhead in a fish carrier, in which said tank has a wall which is constituted by a curved inner skin in the hull, and a second wall which is constituted by a centre bulkhead.

Figure 2b is the same schematic top view as Figure 2a, in which said sliding bulkhead is displaced astern and forces population (p2) out through an outlet in said aft end of said vessel.

Figure 2c shows the same schematic top view of said tank, in which said sliding bulkhead (6) now is displaced ahead towards the bow, and in which a separation grating is completely open and/or said transversal sliding bulkhead has been completely withdrawn along said sliding bulkhead, in order to have the fish flow through to the larger tank volume astern of said sliding bulkhead without obstruction.

Figure 2d illustrates that said sliding bulkhead is displaced astern again with said separation grating and/or said transversal sliding bulkhead closed for population p1, and forces population p1 out through said outlet for water and fish, this time also preferably to another location than for population p2.

Figures 2a-2d illustrates a sliding bulkhead with both an adjustable separation grating and a transversal sliding bulkhead. It is possible to use said transversal sliding bulkhead as a replacement for the method for unloading two separate loads of fish. It would be more difficult, but not impossible, to sort a mixed load of two population as shown in Figure 3a-d by allowing a consecutively adjusted grating aperture between said transversal sliding bulkhead 7 and said inner skin 11 for replacing said separation grating 60 in said sliding bulkhead. Said separation grating 60 could also be arranged in said transversal sliding bulkhead 6.

### Sorting of the fish into three size classes

Sorting the fish into at least three size classes is possible by means of a single sliding bulkhead. Figure 4a is similar to figure 3a a rather simplified schematic top view of a transport tank at the starborard side of a centre bulkhead in a fish carrier. As explained above, a sliding bulkhead runs in the longitudinal direction of the vessel. The difference from figure 3 is that the transport tank includes three mixed populations p1 (smallest individual size), p2 (medium size) og p3 (largest individual size) to be unloaded separately. The sliding bulkhead is displaced to a fore end of the tank, which may be done before loading the fish into said vessel.

Figure 4b illustates that oxygen rich fresh water is supplied in through inlet (46) by pumping. The sliding bulkhead is displaced astern from the forward position and the populations (p1) and (p2) tend to move towards the water flow through the separation grating to more oxygen rich water in the fore end of the tank, while the largest-grown population (p3) will be displaced astern towards the outlet in the aft end of the tank, and will exit with the tail first due to the direction of the water flow and lack of space in the displaced part of the tank. The fish will now be sorted into (p1+p2) and (p3) at the same time as population (p3) is removed from the tank. Thus, population (p3) can be forwarded to a separate fish cage for further feeding or slaughtering.

After the situation in Figure 4b, two size classes will be present in the fore part of the tank. Figure 4c illustrates a preferred method of tempting populations (p1+p2) back to the aft end of the tank by means of turning the water flow in the tank at the same time as running the sliding bulkhead ahead towards the bow in an open position, possibly by a completely open or removed separation grating.

Figure 4d illustrates a next step of this method according to the invention in which population (p2) is displaced astern by means of the sliding bulkhead with the separation grating open for population (p1), and in which population p2 is forced out through the outlet at the aft end of the tank. The final steps for forcing out the smallest population (p1) after the situation shown in figure 4d correspond to a repetition of the method illustrated in figure 3c and 3d.

The term fresh water includes fresh oxygen rich seawater taken from the sea, or oxygenated recycled water.

## Claims

1. A method for sorting of mixed populations (p1, p2) of fish into two different size classes, called a population (p1) of smaller-size fish and a population (p2) of larger-size fish, in a fish carrier having a sliding bulkhead (6) with a separation grating (60) in a transport tank (0), said transport tank (0) having at least one fore inlet (46) for fresh oxygen rich seawater taken from the sea, or oxygenated recycled water, and at least one aft outlet (42) for water and fish, **characterized in that** it comprises the following steps:
i) opening said separation grating (60) and running said sliding bulk-head (6) towards the inlet (46) to a position closer to the inlet (46) than a desired part, preferably all, of the populations (p1, p2);
ii) restricting said separation grating (60) to a grating aperture smaller than the size of the individuals in said population (p2) and larger than the size of the individuals of said smaller-size population (p1) and running said sliding bulkhead (6) astern, so that said sliding bulkhead (6) with the separation grating (60) displaces said larger-size population (p2) towards the outlet (42) so that said population (p2) is forced out through outlet (42), thus allowing said smaller-size population (p1) to escape ahead through said separation grating (60);
iii) opening said separation grating (60), and running said sliding bulkhead (6) towards said inlet (46) to a position closer to said inlet (46) than a desired part, preferably all, of the population (p1) of smaller individuals; and
iv) restricting said grating apertures in said separation grating (60), and running said sliding bulkhead (6) with said separation grating (60) astern, so that said population (p1) of smaller-size individuals is displaced towards said outlet (42) and is forced out through said outlet (42).

2. The method according to claim 1, further comprising an intake of fresh oxygen rich seawater from the sea, or oxygenated recycled water, through said fore inlet (46) and an outlet of water through outlet (42), simultaneously with step (ii) of restricting said separation grating (60) to a grating aperture which is smaller than the size of the individuals in population (p2), and running said sliding bulkhead (6) astern, so that said sliding bulkhead (6) with the separation grating (60) displaces said larger-size population (p2) towards said outlet (42) so that said population (p2) is forced out through outlet (42).

3. The method according to claim 1, further comprising an intake of fresh oxygen rich seawater from the sea, or oxygenated recycled water, through an aft inlet (48) so that the water flow in the tank flows from astern and ahead in the tank (0), with an outlet of water through a fore outlet (47) under step (iii) of opening of said separation grating (60) and running said sliding bulkhead (6) towards said inlet (46) to a position closer to said inlet (46) than the desired part, preferably all, of said population (p1) of smaller-size individuals.

4. A fish carrier for sorting of mixed populations (p1, p2) of fish into two different size classes, called a population (p1) of smaller-size fish and a population (p2) of larger-size fish, having a sliding bulkhead (6) with a separation grating (60) in a transport tank (0), the transport tank (0) having at least one fore inlet (46) for fresh oxygen rich seawater taken from the sea, or oxygenated recycled water, and at least one aft outlet (42) for water and fish, **characterized by**:
an adjustable separation grating (60) for running said sliding bulkhead (6) towards said inlet (46) to a position closer to said inlet (46) than a desired part, preferably all, of said populations (p1, p2);
wherein the separation grating (60) is arranged for being restrictable to a grating aperture which is smaller than the size of the individuals in said population (p2) for running said sliding bulkhead astern, so that said sliding bulkhead (6) with separation grating (60) can displace said larger-size population (p2) towards said outlet (42) so that said population (p2) is forced through said outlet (42);
wherein the separation grating (60) is arranged to be opened and said sliding bulkhead (6) is arranged to be run towards said inlet (46) to a position closer to said inlet (46) than said population (p1) of smaller-size individuals; and
wherein the grating apertures in said separation grating (60) are restrictable and that said sliding bulkhead with said separation grating (60) is arranged to be run astern, so that said population (p1) of smaller-size individuals is forced towards said outlet (42) and forced out through outlet (42).

5. The fish carrier according to claim 4, further comprising a fore inlet (46) for an intake of fresh oxygen rich seawater from the sea, or oxygenated recycled water, and an aft outlet (42) for water.

6. The fish carrier according to claim 4, further comprising an aft inlet (48) for fresh oxygen rich seawater from the sea, or oxygenated recycled water, so that the water flow in said tank may take place from astern and ahead in said tank (0) with outlet of water through a fore outlet (47) during opening of said separation grating (60) and running said sliding bulkhead (6) towards said inlet (46) to a position closer to said inlet (46) than the desired part, preferably all, of said population (p1) of smaller-size individuals.

## Patentansprüche

1. Verfahren zum Sortieren gemischter Populationen (p1, p2) von Fischen in zwei verschiedene Größenklassen, die als eine Population (p1) von Fischen kleinerer Größe und eine Population (p2) von Fischen größerer Größe bezeichnet werden, in einem Fischtransporter, der in einem Transportbehälter (0) eine Schiebetrennwand (6) mit einem Trenngitter (60) aufweist, wobei der Transportbehälter (0) wenigstens eine vordere Einlassöffnung (46) für aus der See aufgenommenes frisches sauerstoffreiches Meerwasser und wenigstens eine hintere Auslassöffnung (42) für Wasser und Fisch aufweist, **dadurch gekennzeichnet, dass** das Verfahren die folgenden Schritte umfasst:
I) Öffnen des Trenngitters (60) und Verfahren der Schiebetrennwand (6) in Richtung auf die Einlassöffnung (46) auf eine Position näher der Einlassöffnung (46) als ein erwünschter Teil, bevorzugt der gesamte, der Populationen (p1, p2),
II) Verengen des Trenngitters (60) auf eine Gitteröffnung, die kleiner als die Größe der Individuen in der Population (p2) ist und größer als die Größe der Individuen der Population (p1) kleinerer Größe ist und Verfahren der Schiebetrennwand (6) nach achtern, so dass die Schiebetrennwand (6) mit dem Trenngitter (60) die Population (p2) größerer Größe in Richtung auf die Auslassöffnung (42) verdrängt, so dass die Population (p2) durch die Auslassöffnung (42) hinaus gezwungen wird und infolgedessen der Population (p1) kleinerer Größe ermöglich wird, vorwärts durch das Trenngitter (60) zu entweichen.
III) Öffnen des Trenngitters (60) und Verfahren der Schiebetrennwand (6) in Richtung auf die Einlassöffnung (46) auf eine Position näher an der Einlassöffnung (46) als ein erwünschter Teil, bevorzugt der gesamte, der Population (p1) von Individuen kleinerer Größe und
IV) Verengen der Gitteröffnungen in dem Trenngitter (60) und Verfahren der Schiebetrennwand (6) mit dem Trenngitter (60) nach achtern so, dass die Population (p1) von Individuen kleinerer Größe in Richtung auf die Auslassöffnung (42) verdrängt wird und durch die Auslassöffnung (42) hinaus gezwungen wird.

2. Verfahren nach Anspruch 1, umfassend des Weiteren ein Aufnehmen von frischem sauerstoffreichem Meerwasser aus der See oder von sauerstoffangereichertem wiederaufbereitetem Wasser durch die vordere Einlassöffnung (46) und ein Ablassen von Wasser durch die Auslassöffnung (42) gleichzeitig mit dem Schritt (II) des Verengens des Trenngitters (60) auf eine Gitteröffnung, die kleiner als die Größe der Individuen in der Population (p2) ist, und des Verfahrens der Schiebetrennwand (6) nach hinten so, dass die Schiebetrennwand (6) mit dem Trenngitter (60) die Population (p2) größerer Größe in Richtung auf die Auslassöffnung (42) verdrängt, so dass die Population (p2) durch die Auslassöffnung (42) hinaus gezwungen wird.

3. Verfahren nach Anspruch 1, umfassend des Weiteren ein Aufnehmen von frischem sauerstoffreichem Meerwasser aus der See oder von sauerstoffangereichertem wiederaufbereitetem Wasser durch eine hintere Einlassöffnung (48), so dass die Wasserströmung in dem Behälter von achtern und nach vorne in den Behälter (0) strömt, mit einem Ablass von Wasser durch eine vordere Auslassöffnung (47) während Schritt (III) des Öffnens des Trenngitters (60) und des Verfahrens der Schiebetrennwand (6) in Richtung auf die Einlassöffnung (46) auf eine Position näher an der Einlassöffnung (46) als der erwünschte Teil, bevorzugt der gesamte, der Population (p1) von Individuen kleinerer Größe.

4. Fischtransporter zum Sortieren gemischter Populationen (p1, p2) von Fischen in zwei verschiedene Größenklassen, die als eine Population (p1) von Fischen kleinerer Größe und eine Population (p2) von Fischen größerer Größe bezeichnet werden, der in einem Transportbehälter (0) eine Schiebetrennwand (6) mit einem Trenngitter (60) aufweist, wobei der Transportbehälter (0) wenigstens eine vordere Einlassöffnung (46) für aus der See aufgenommenes frisches sauerstoffreiches Meerwasser und wenigstens einen hintere Auslassöffnung (42) für Wasser und Fisch aufweist und **gekennzeichnet ist durch**:
ein verstellbares Trenngitter (60) zum Verfahren der Schiebetrennwand (6) in Richtung der Einlassöffnung (46) auf eine Position näher in Richtung auf die Einlassöffnung (46) als ein erwünschter Teil, bevorzugt der gesamte, der Populationen (p1, p2),
wobei das Trenngitter (60) eingerichtet ist, um auf eine Gitteröffnung verengt werden zu können, die kleiner als die Größe der Individuen in der Population (p2) ist, um die Schiebetrennwand so nach achtern zu verfahren, dass die Schiebetrennwand (6) mit Trenngitter (60) die Population (p2) größerer Größe in Richtung auf die Auslassöffnung (42) verdrängen kann, so dass die Population (p2) **durch** die Auslassöffnung (42) gezwungen wird,
wobei das Trenngitter (60) eingerichtet ist, um geöffnet zu werden, und die Schiebetrennwand (6) eingerichtet ist, um in Richtung auf die Einlassöffnung (46) auf eine Position näher an der Einlassöffnung (48) als die Population (p1) von Individuen kleinerer Größe verfahren zu werden, und
wobei die Gitteröffnungen in dem Trenngitter (60) verengt werden können und die Schiebetrennwand mit dem Trenngitter (60) eingerichtet ist, um so nach achtern verfahren zu werden, dass die Population (p1) von Individuen kleinerer Größe in Richtung auf die Auslassöffnung (42) gezwungen wird und **durch** die Auslassöffnung (42) gezwungen wird.

5. Fischtransporter nach Anspruch 4, der des Weiteren eine vordere Einlassöffnung (46) für eine Aufnahme von frischem sauerstoffreichem Meerwasser aus der See oder von sauerstoffreichem wiederaufbereitetem Wasser und eine hintere Auslassöffnung (42) für Wasser hat.

6. Fischtransporter nach Anspruch 4, der des Weiteren eine hintere Einlassöffnung (48) für frisches sauerstoffreiches Meerwasser aus der See oder für sauerstoffangereichertes wiederaufbereitetes Wasser hat, so dass das Wasserströmen in dem Behälter von achtern und nach vorne in Behälter (0) stattfinden kann, mit einem Ablassen von Wasser durch eine vordere Auslassöffnung (47) während des Öffnens des Trenngitters (60) und Verfahrens der Schiebetrennwand (6) in Richtung auf die Einlassöffnung (46) auf eine Position näher an der Einlassöffnung (46) als der erwünschte Teil, bevorzugt der gesamte, der Population (p1) von Individuen kleinerer Größe.

## Revendications

1. Procédé de tri de populations mélangées (p1, p2) de poissons en deux classes de tailles différentes, désignées par population (p1) de poissons de taille inférieure et population (p2) de poissons de taille supérieure, dans un transporteur de poissons présentant une cloison (6) coulissante avec une grille de séparation (60) dans un réservoir de transport (0), ledit réservoir de transport (0) présentant au moins une entrée avant (46) pour de l'eau de mer fraîche, riche en oxygène, provenant de la mer, ou de l'eau recyclée, oxygénée, et au moins une sortie arrière (42) pour l'eau et le poisson, **caractérisé en ce qu'**il comprend les étapes suivantes:
i) ouvrir ladite grille de séparation (60) et déplacer ladite cloison coulissante (6) en direction de l'entrée (46) jusque dans une position plus proche de l'entrée (46) qu'une partie souhaitée, de préférence l'entièreté des populations (p1, p2);
ii) réduire ladite grille de séparation (60) à une ouverture de grille inférieure à la taille des individus de ladite population (p2) et supérieure à la taille des individus de la population (p1) de taille inférieure, et déplacer ladite cloison coulissante (6) vers l'arrière, de telle sorte que ladite cloison coulissante (6) avec la grille de séparation (60) déplace ladite population (p2) de taille supérieure en direction de la sortie (42) de telle sorte que la population (p2) est chassée dehors par la sortie (42), permettant donc à la population (p1) de taille inférieure de s'échapper vers l'avant à travers la grille de séparation (60);
iii) ouvrir ladite grille de séparation (60) et déplacer ladite cloison coulissante (6) en direction de ladite entrée (46) jusque dans une position plus proche de ladite entrée (46) qu'une partie souhaitée, de préférence l'entièreté de la population (p1) d'individus plus petits; et
iv) réduire lesdites ouvertures dans ladite grille de séparation (60), et déplacer ladite cloison coulissante (6) avec ladite grille de séparation (60) vers l'arrière, de telle sorte que ladite population (p1) d'individus de taille inférieure est déplacée en direction de ladite sortie (42) et est chassée dehors par ladite sortie (42).

2. Procédé selon la revendication 1, comprenant en outre une admission d'eau de mer fraîche, riche en oxygène, provenant de la mer, ou d'eau recyclée oxygénée, par ladite admission avant (46) et une sortie d'eau par la sortie (42), simultanément avec l'étape (ii) de réduction de ladite grille de séparation (60) à une ouverture de grille qui est inférieure à la taille des individus dans la population (p2), et le déplacement de ladite cloison coulissante (6) vers l'arrière, de telle sorte que ladite cloison coulissante (6) avec la grille de séparation (60) déplace ladite population (p2) de taille supérieure en direction de la sortie (42) de telle sorte que ladite population (p2) est chassée dehors par la sortie (42).

3. Procédé selon la revendication 1, comprenant en ouvre une admission d'eau de mer fraîche, riche en oxygène provenant de la mer, ou d'eau recyclée oxygénée, par une entrée (48) arrière, de telle sorte que le courant d'eau dans le réservoir circule à partir de l'arrière et dans la partie supérieure du réservoir (0), avec une sortie d'eau par une sortie (47) avant, à l'étape (iii) d'ouverture de ladite grille de séparation (60) et de déplacement de ladite cloison coulissante (6) en direction de ladite entrée (46) jusque dans une position plus proche de ladite entrée (46) que la partie souhaitée, de préférence l'entièreté de ladite population (p1) d'individus de taille inférieure.

4. Transporteur de poissons pour trier des populations mélangées (p1, p2) de poissons en deux classes de tailles différentes, désignées par population (p1) de poissons de taille inférieure et population (p2) de poissons de taille supérieure, présentant une cloison coulissante (6) avec une grille de séparation (60) dans un réservoir de transport (0), le réservoir de transport (0) présentant au moins une entrée avant (46) pour de l'eau de mer fraîche, riche en oxygène, provenant de la mer, ou de l'eau recyclée, oxygénée, et au moins une sortie arrière (42) pour l'eau et le poisson, **caractérisé par**:
une grille de séparation (60) ajustable pour déplacer ladite cloison coulissante (6) en direction de ladite entrée (46) jusque dans une position plus proche de ladite entrée (46) qu'une partie souhaitée, de préférence l'entièreté desdites populations (p1, p2);
ladite grille de séparation (60) étant agencée pour pouvoir être amenée à une ouverture de grille inférieure à la taille des individus de ladite population (p2) pour déplacer ladite cloison coulissante (6) vers l'arrière, de telle sorte que ladite cloison coulissante (6) avec la grille de séparation (60) peut déplacer ladite population (p2) de taille supérieure en direction de ladite sortie (42) de telle sorte que ladite population (p2) est chassée par l'ouverture de sortie (42);
la grille de séparation (60) étant agencée pour être ouverte et ladite cloison coulissante (6) étant agencée pour être déplacée en direction de ladite entrée (46) jusque dans une position plus proche de ladite entrée (46) que ladite population (p1) d'individus de taille inférieure; et
les ouvertures dans ladite grille de séparation (60) pouvant être réduites, et ladite cloison coulissante avec ladite grille de séparation (60) étant agencée pour être déplacée vers l'arrière, de telle sorte que ladite population (p1) d'individus de taille inférieure est déplacée en direction de ladite sortie (42) et est chassée dehors par ladite sortie (42).

5. Transporteur de poissons selon la revendication 4, comprenant en outre une entrée (46) avant pour l'admission d'eau de mer riche en oxygène provenant de la mer, ou d'eau recyclée, oxygénée, et une sortie (42) arrière pour l'eau.

6. Transporteur de poisson selon la revendication 4, comprenant en outre une entrée (48) arrière pour de l'eau de mer fraîche, riche en oxygène, provenant de la mer, ou de l'eau recyclée, oxygénée, de telle sorte que le courant d'eau dans ledit réservoir puisse circuler à partir de l'arrière et dans le haut dudit réservoir (0) avec sortie de l'eau par une sortie (47) avant pendant l'ouverture de ladite grille de séparation (60), et le déplacement de ladite cloison coulissante (6) en direction de ladite entrée (46) jusque dans une position plus proche de ladite entrée (46) que la partie souhaitée, de préférence l'entièreté de ladite population (p1) d'individus de taille inférieure.
